# EUROPEAN PATENT APPLICATION

(11) **EP 4 614 252 A1**
(43) Date of publication of application: **10.09.2025**
(21) Application number: 23884839.4
(22) Date of filing: 30.10.2023
(51) Int. Cl.: G05B 19/418, G06Q 50/04, G06Q 10/06

(54) **AUTOMATED PROCESS MANAGEMENT METHOD AND APPARATUS, ELECTRONIC DEVICE, AND STORAGE MEDIUM**

(30) Priority: 04.11.2022 CN 202211376123
(71) Applicant: Shenzhen Megarobo Technologies Co., Ltd., Shenzhen, Guangdong 518107 (CN)
(72) Inventor: SUN, Fei, Shenzhen, Guangdong 518107 (CN)
(74) Representative: Hofmann, Matthias
(86) International application number: PCT/CN2023/127748
(87) International publication number: WO 2024/093909

(57) **Abstract**

Embodiments of the present application provide an automated process management method and apparatus, an electronic device, and a storage medium. The method comprises: acquiring time constraint information between two adjacent nodes in an automated process, wherein the time constraint information is used for constraining execution time of executing a transfer operation on a target between the two adjacent nodes; according to the connection relationship of the two adjacent nodes in the automated process, determining an execution sequence of minimum sub-operations between the two adjacent nodes; at least according to the execution sequence and preset execution time of each minimum sub-operation, determining total time of executing the transfer operation between the two adjacent nodes; and according to the total time, verifying whether the time constraint information is reasonable. This solution can ensure the effectiveness of a target in an automated process, and therefore can ensure that the automated process is accurately and smoothly performed.

## Description

This application claims the priority to Chinese Patent Application No.202211376123.6, titled "AUTOMATED PROCESS MANAGEMENT METHOD AND APPARATUS, ELECTRONIC DEVICE, AND STORAGE MEDIUM", filed on November 04, 2022 with the China National Intellectual Property Administration, which is incorporated herein by reference in its entirety.

### FIELD

The present disclosure relates to the field of automation, and in particular to a management method for an automated process, a management apparatus for an automated process, an electronic device, and a storage medium.

### BACKGROUND

At present, many technological fields are undergoing continuous automation transformation, to liberate manpower and improve efficiency. Automation systems are widely used in automated manufacturing, automated detection, automated testing/experiment, or the like. In an automation system, the entire automated process is divided into multiple operations performed by individual devices. The operations include not only primary operations where execution devices handle the target, but also transfer operations where transfer devices transfer the target between different execution devices.

Taking a laboratory automation system as an example, execution devices from different manufacturers, such as an incubator, a centrifuge, a liquid workstation, a lid remover or a microplate reader, may be integrated to perform different experimental operations on corresponding samples. In addition, transfer operations via for example robotic arms for transferring samples between different execution devices are generally needed to ensure the smooth execution of the experimental process. During the automated process, it takes a certain execution duration for each transfer device to complete each transfer operation. However, timeout may occur due to device fault or communication issues. In addition, there are special requirements for exposure time of some samples. For example, the time for transferring bacterial suspension carried by a well plate exceeding a certain time limit may lead to deterioration of the bacterial suspension.

In the prior art, the automation system can schedule operations in the automated process based on time. For example, a transfer device in the automated process may take a certain amount of time to perform a corresponding transfer operation. Based on this, the automation system may schedule execution operations of subsequent devices following the transfer device in the automated process, making the subsequent devices perform corresponding operations as scheduled. However, the problem of excessively long exposure time of the sample due to the excessively long time for transferring the sample is generally ignored, leading to deterioration of the sample. The deterioration of the sample is very likely to disrupt the normal proceeding of the automated process, resulting in wrong results.

### SUMMARY

In view of the above problem, the present disclosure is proposed. A management method for an automated process is provided according to an aspect of the present disclosure. The management method for the automated process includes: obtaining temporal constraint information between two adjacent nodes in the automated process, where the temporal constraint information is for constraining an execution duration for performing a transfer operation on a target between the two adjacent nodes; determining an execution sequence of atomic operations between the two adjacent nodes based on a connection relationship of the two adjacent nodes in the automated process; determining a total duration for performing the transfer operation between the two adjacent nodes, based at least on the execution sequence and preset execution duration of each of the atomic operations; and verifying whether the temporal constraint information is reasonable based on the total duration.

In an embodiment, the execution sequence includes a serial execution sequence and a parallel execution sequence, and the determining a total duration for performing the transfer operation between the two adjacent nodes includes: determining, based on the execution sequence of the atomic operations between the two adjacent nodes, atomic operations that are performed in the serial execution sequence between the two adjacent nodes, to form a serial sub-operation; and calculating a sum of preset execution durations of atomic operations in the serial sub-operation as the total duration.

In an embodiment, the determining a total duration for performing the transfer operation between the two adjacent nodes includes: determining the total duration based on node types of the two adjacent nodes, the execution sequence, and preset execution durations of at least part of the atomic operations involved in a device node of the two adjacent nodes, where the node type includes a device node.

In an embodiment, the node type further includes a start node of the automated process, and the determining the total duration includes: in a case that the two adjacent nodes are respectively a start node and a device node, determining a first sum of the preset execution durations of all atomic operations involved in a pre-operation corresponding to the device node as the total duration, where the pre-operation is completed before a device corresponding to the device node performs its own operation.

In an embodiment, the determining the total duration includes: in a case that the two adjacent nodes are both device nodes, calculating a second sum of the preset execution durations of all atomic operations involved in a post-operation corresponding to an upstream node of the two adjacent nodes, and calculating a third sum of the preset execution durations of all atomic operations involved in a pre-operation corresponding to a downstream node of the two adjacent nodes, where the post-operation is completed after a device corresponding to the upstream node performs its own operation, and the pre-operation is completed before a device corresponding to the downstream node performs its own operation; and adding the second sum of the preset execution durations and the third sum of the preset execution durations to obtain the total duration.

In an embodiment, the node type further includes an end node of the automated process, and the determining the total duration includes: in a case that the two adjacent nodes are respectively a device node and an end node, determining a fourth sum of the preset execution durations of all atomic operations involved in a post-operation corresponding to the device node as the total duration, where the post-operation is completed after a device corresponding to the device node performs its own operation.

In an embodiment, before the obtaining temporal constraint information between two adjacent nodes in the automated process, the method further includes: displaying a graphical user interface, where the graphical user interface includes an operable control; and receiving the temporal constraint information from a user in response to a first operation performed by the user with the operable control.

In an embodiment, at least one device node of the two adjacent nodes corresponds to a plurality of targets, and the receiving the temporal constraint information from a user in response to a first operation performed by the user with the operable control includes: receiving the temporal constraint information for each target from the user in response to the first operation performed for each target by the user with the operable control; and the verifying whether the temporal constraint information is reasonable includes: verifying whether the temporal constraint information about each of the plurality of targets between the two adjacent nodes is reasonable.

In an embodiment, the temporal constraint information includes expiration time information and maximum waiting time information, and the verifying whether the temporal constraint information is reasonable includes: verifying whether an expiration time indicated by the expiration time information is reasonable, in a case that the expiration time is greater than 0; and determining a maximum execution duration of the transfer operation based on the total duration and a maximum waiting time indicated by the maximum waiting time information, in a case that the expiration time is equal to 0.

In an embodiment, the determining a maximum execution duration of the transfer operation includes: determining a sum of the total duration and the maximum waiting time indicated by the maximum waiting time information as the maximum execution duration.

In an embodiment, the temporal constraint information includes expiration time information, and after the verifying whether the temporal constraint information is reasonable, the method further includes: after determining that the temporal constraint information is reasonable, running the automated process in response to a second operation performed by the user; when the automated process proceeds to a downstream node in the two adjacent nodes, determining whether an execution duration for performing the transfer operation on the target between the two adjacent nodes is greater than an expiration time indicated by the expiration time information; and marking the target with an expired state, in a case that the execution duration of the transfer operation on the target between the two adjacent nodes is greater than the expiration time indicated by the expiration time information.

In an embodiment, the determining an execution sequence of atomic operations between the two adjacent nodes includes: parsing to obtain atomic operations between the two adjacent nodes based on node information of the two adjacent nodes and hardware device layout of the automation system, where each atomic operation represents an individual operation performed by a single hardware device; and determining, based on the connection relationship, an execution sequence of the atomic operations obtained from the parsing.

According to another aspect of the present disclosure, a management apparatus for an automated process is provided, and the management apparatus for the automated process includes: an obtaining module, configured to obtain temporal constraint information between two adjacent nodes in the automated process, where the temporal constraint information is for constraining an execution duration for performing a transfer operation on a target between the two adjacent nodes; a first determination module, configured to determine an execution sequence of atomic operations between the two adjacent nodes based on a connection relationship of the two adjacent nodes in the automated process; a second determination module, configured to determine a total duration for performing the transfer operation between the two adjacent nodes, based at least on the execution sequence and a preset execution duration of each of the atomic operations; and a verification module, configured to verify whether the temporal constraint information is reasonable based on the total duration.

According to another aspect of the present disclosure, an electronic device is provided, and the electronic device includes a processor and a memory, where the memory stores computer program instructions, and the computer program instructions, when executed by the processor, implement the management method for the automated process described above.

According to another aspect of the present disclosure, a storage medium is provided, where the storage medium stores program instructions, and the program instructions, when executed, implement the management method for the automated process described above.

In the technical solution described above, the total duration for performing the transfer operation on the target between two adjacent nodes is determined based on the connection relationship between the two adjacent nodes in the automated process, and further the temporal constraint information configured in advance for constraining the execution duration of the transfer operation is verified based on the total duration. This solution can ensure the efficacy of the target in the automated process, thereby ensuring the accurate and smooth progress of the automated process.

The above description is merely an overview of the technical solutions according to the present disclosure. To enable a clearer understanding of the technical solutions according to the present disclosure, implement the technical solutions based on the content of the specification, and make the above and other objectives, features, and advantages of the present disclosure more apparent and comprehensible, specific embodiments of the present disclosure are explicitly described below.

### BRIEF DESCRIPTION OF THE DRAWINGS

Above and other objects, features, and advantages of the present disclosure will become more apparent with reference to a more detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 shows a schematic flowchart of a management method for an automated process according to an embodiment of the present disclosure;
FIG. 2 shows a schematic diagram illustrating multiple atomic operations between two adjacent nodes according to an embodiment of the present disclosure;
FIG. 3 shows a schematic diagram illustrating a part of an automated process according to an embodiment of the present disclosure;
FIG. 4 shows a schematic block diagram of a management apparatus for an automated process according to an embodiment of the present disclosure; and
FIG. 5 shows a schematic block diagram of an electronic device according to an embodiment of the present disclosure.

### DETAILED DESCRIPTION

Exemplary embodiments of the present disclosure are described in detail with reference to the drawings to make purposes, technical solutions, and advantages of the present disclosure more apparent. Apparently, the described embodiments are only a part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts are deemed to fall into the protection scope of the present disclosure.

In order to solve the technical problems described above, a management method for an automated process is provided according to an aspect of the present disclosure. The management method according to the embodiment of the present disclosure may be applied to automated process for various suitable targets in various fields. For convenience of illustration, an automated process of an automation system in the field of biochemistry is described in the following as an example.

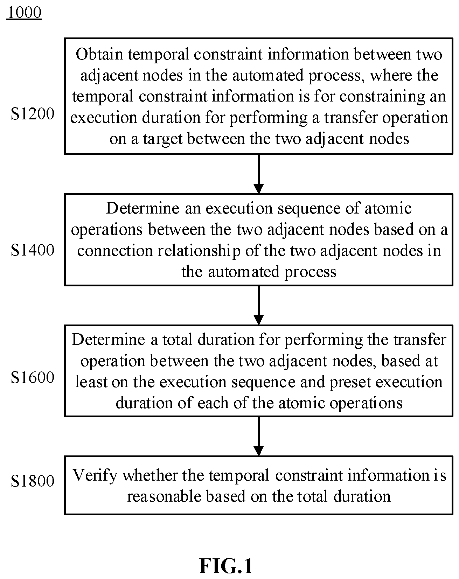

FIG. 1 shows a schematic flowchart of a management method 1000 for an automated process according to an embodiment of the present disclosure. As shown in FIG. 1, the management method 1000 may include steps S1200, S1400, S1600, and S1800.

In step S1200, temporal constraint information between two adjacent nodes in the automated process is obtained, where the temporal constraint information is for constraining an execution duration for performing a transfer operation on a target between the two adjacent nodes.

The automated process may be an experimental process pre-designed based on actual testing/experimental requirements. By way of example and not limitation, the step S1200 may be performed after completing the design of the automated process and before the execution of the automated process, in response to any triggering operation from a user. The triggering operation may be any suitable operation. For example, the triggering operation may be a user clicking on an operable control such as "pre-execute process" on the user interface, after the design of the automated process is completed and the automated process is preliminarily verified. According to the embodiment of the present disclosure, the automated process may be operational process of executing various related operations required for a testing/experiment on the target. The automated process may involve various process information, such as execution subjects and execution objects of respective operations, execution contents, execution conditions, execution duration and execution logics for executing the operations, or the like. The target may refer to an operable object in the automated process, which may be any suitable target. By way of example and not limitation, the target may be laboratory consumables such as test tubes, glass sheets, well plates, or the like for carrying samples such as bacterial suspension. Definitely, for automated processes in other fields, the target may be other forms of operable objects.

The automated process may be formed by connecting multiple nodes in an orderly manner based on a certain execution mode. Each node may correspond to a preset service. The preset service may be a specific operation performed by a preset execution subject, such as various operations performed on the target using preset experimental devices. The preset service may also be control of only partial of the process, such as a decision control and a cycle control. Each node may be configured with corresponding node information, for example by system presetting or by receiving customized configuration from the user before the design stage of the automated process or alternatively during the design stage of the automated process. The node information may include a name of the node, a type of the node, service information corresponding to the node, or the like. In a case that the service corresponding to the node includes an operation executed on the target, the service information corresponding to the node may include information such as operation categories of various operations executed on the node, execution sequences of various operations, and estimated time consumption of various operations. It is to be understood that the node information may be configured depending on design requirements of the actual experimental process.

Nodes in the automated process may be connected in a certain sequence to form a complete automated process. For the entire automated process, the execution of services corresponding to the respective nodes is not isolated from each other. In particular, services executed on two adjacent nodes in the automated process may be interrelated. The two adjacent nodes may be any two nodes in the automated process that are directly connected in the order of execution. The two adjacent nodes are, for example, an upstream node A and a downstream node B in the automated process. It is to be understood that the upstream node A is closer to the start end of the automated process than the downstream node B. The downstream node B may be an intermediate node of the automated process. The execution of the service corresponding to the downstream node B may be started after the execution of the service corresponding to the upstream node A is completed. In other words, for two adjacent nodes in the automated process, the execution condition of the downstream node may depend on the completion of the execution of the service corresponding to the upstream node. Alternatively, certain services executed by the upstream node may affect the execution of services corresponding to the downstream node. Specifically, the services corresponding to two adjacent nodes may both include operations aimed for a certain target. For example, the service corresponding to the upstream node A includes the following various operations: a primary operation that the centrifuge performs centrifuging on a consumable 1, and a post-operation that a transfer device transfers the consumable 1 out of the centrifuge after the primary operation. The service corresponding to the downstream node B includes the following various operations: a pre-operation that the transfer device transfers the consumable 1 into the incubator, and a primary operation of completing incubating the bacterial suspension of the consumable 1 in the incubator after the pre-operation. It is to be understood that the execution of the primary operation corresponding to the downstream node B depends on both the execution of the post-operation that the transfer device of the upstream node A transfers the consumable 1 and the execution of the pre-operation that the transfer device of the downstream node B transfers the consumable 1. As shown in the above example, the device node does not only correspond to the primary operation performed by the execution device. Before the primary operation, there may be a pre-operation performed by the execution device or other devices. After the primary operation, there may be a post-operation performed by the execution device or other devices. In other words, the device node may correspond to a primary operation, a pre-operation, and/or a post-operation (if any).

In a case that the service corresponding to the node includes a specific operation, the execution of the operation consumes a certain execution duration. For example, the primary operation, the pre-operation, and the post-operation in the above example may each include one or more atomic operations, and the execution of each atomic operation takes a certain amount of time. The automated process may also control the execution duration of the operations to ensure the operation efficiency of the process. Moreover, as described above, during actual practice of the automated process, due to device fault, communication issues or other factors, the actual execution duration of the operations may often exceed the theoretical execution duration of the operations. And for some specific targets, for example, experimental consumables such as a bacterial suspension, exceeding a certain time length during processing or transfer in a certain device may lead to expiration and loss of efficacy. Considering these two factors, in order to ensure the smooth progress of the automated process and the efficacy of the target, it is advisable to allow for reasonable tolerance for the execution duration of some related operations. It is advisable to set reasonable temporal constraints in the temporal constraint information to constrain the actual execution duration of the related operations. This approach not only allows the process to continue normally even if the theoretical execution duration is exceeded but also allows marking the target as expired or to be discarded if the constrained safe period or effective period is exceeded; and the target may further be transferred to a discard location after it is marked as to be discarded.

According to the embodiment of the present disclosure, the temporal constraint information may be configured between two adjacent nodes, or may also be configured within a node, depending on the actual temporal constraint requirement. The temporal constraint information within the node may be adopted to constrain the execution duration of the primary operation within the node which is performed with a primary execution device corresponding to the node, such as a centrifuge. The temporal constraint information between nodes may be adopted to constrain the execution duration for performing the transfer operation between two adjacent nodes which is performed with for example the foregoing transfer device. The following mainly explains the temporal constraint information between nodes.

As described above, the transfer operation may be a related operation performed on the target by the transfer device. For the condition that any one of two adjacent nodes involves the transfer operation, the temporal constraint information may be configured between the two nodes when designing the automated process. The constraint indicated by the temporal constraint information between two adjacent nodes may be configured depending on the constraint requirement of the process. By way of example and not limitation, the temporal constraint information may include expiration time information and maximum waiting time information. The expiration time information may be a preset maximum safe period of the transfer operation performed on the target, and a corresponding expiration processing is performed on the target, for example, marking the target as expired, when the preset maximum safe period is exceeded. The maximum waiting time information may be a preset maximum effective period of the transfer operation performed on the target, and a corresponding invalidating and/or discarding operation is performed on the target, for example, marking the target as invalidated and discarding the target, when the preset maximum effective period is exceeded. Definitely, the temporal constraint information may also be other suitable information for constraining the time period of the transfer operation performed on the target. In step S1200, the corresponding time length constrained by the temporal constraint information may be obtained by, for example, reading the temporal constraint information between two adjacent nodes.

In step S 1400, an execution sequence of atomic operations between the two adjacent nodes is determined based on a connection relationship of the two adjacent nodes in the automated process.

As described above, the automated process may include multiple nodes, and the multiple nodes may be connected in a certain connection relationship to form a complete automated process. The connection relationship may include direct connection or indirect connection. Where, there may be a direct connecting line between two directly connected nodes. Furthermore, the line may have a direction to indicate the execution sequence of the connected nodes.

According to the embodiment of the present disclosure, two adjacent nodes in the process may be determined from each line in the process, and the execution sequence of services corresponding to the two nodes may be determined based on the direction of the line between the two adjacent nodes. The nodes at two ends of each line may be determined as two adjacent nodes. Among the two adjacent nodes, the node at the direction-pointing end of the line is designated as the downstream node, and the node at the opposite direction of the line is designated as the upstream node. And it is determined that the service corresponding to the upstream node is executed first, and the service corresponding to the downstream node is executed later. That is, an overall execution sequence of corresponding services between two adjacent nodes may be determined first.

According to an embodiment of the present disclosure, the service corresponding to the two adjacent nodes may include various operations such as the pre-operation, the primary operation, and the post-operation as described in the above example. Each operation may include one or more atomic operations. After determining the overall execution sequence of corresponding services between two adjacent nodes as described above, the execution sequence of the atomic operations included in the operations involved in the services corresponding to the nodes may be further determined. For example, service information of nodes can be configured for corresponding nodes based on the determined overall execution sequence of the services corresponding to the two adjacent nodes, and further the execution sequence of the atomic operations in the operations involved in the services corresponding to the two nodes may be determined. As described above, the service information of the node may include operation categories and execution sequence of various operations performed at the node. The operation categories of various operations may be categories of the atomic operations included in the respective operations. The execution sequences of various operations may be the execution sequences of sub-operations of the various operation performed at the node. In this way, after the service information of nodes are configured for the corresponding nodes, it is possible to obtain the execution sequence of the atomic operations of each operation involved in the services corresponding to the two nodes. The execution sequence of the atomic operations may be various suitable execution sequences, such as a serial execution sequence, a parallel execution sequence, or a serial-parallel combined execution sequence.

In step S 1600, a total duration for performing the transfer operation between the two adjacent nodes is determined, based at least on the execution sequence and preset execution duration of each of the atomic operations.

As previously described, the services corresponding to two adjacent nodes may include various operations performed on the target. And the service information of a node may include an estimated time consumption of various operations performed at the node. The estimated time consumption may be the estimated time consumption of the atomic operations of each operation performed at the node, that is, the preset execution duration. The execution sequence of the atomic operations of each operation involved in the services corresponding to the two nodes can be obtained in step S1400, which may include the execution sequence of the transfer operation performed on the target between the two nodes.

Based on this execution sequence, any suitable method may be used to count the preset execution duration of each of the atomic operations involved in the transfer operation, and thus the total duration for performing the transfer operation between the two nodes is determined. For example, in a case that the atomic operations are in the serial execution sequence, the preset execution duration of each of the atomic operations may be summed up to be the total duration. In a case that the atomic operations are in the parallel execution sequence, the longest execution duration of the atomic operations is determined as the total duration. In a case that the atomic operations are in the serial-parallel combined sequence, the total duration of the transfer operation may be determined by a reasonable method correspondingly. The specific implementation of this solution will be explained later and will not be elaborated here.

In step S1800, whether the temporal constraint information is reasonable is verified based on the total duration.

In order to ensure the automated process to be performed smoothly and effectively, the automated process may be pre-run to traverse all nodes in the whole process, so as to verify key information of interests. According to the embodiment of the present disclosure, the total duration for performing the transfer operation between two adjacent nodes determined by the above steps can be utilized in verifying whether the temporal constraint information between any two adjacent nodes is reasonable.

As described above, the total duration determined in step S1600 may be a predicted execution duration or a theoretical execution duration of all atomic operations of the transfer operation performed between two adjacent nodes, which can be calculated by any suitable method. The temporal constraint information between the two nodes acquired in step S1200 is used to constrain the actual execution duration of the transfer operation. And the purpose of setting the temporal constraint information between the two nodes is to allow reasonable tolerance for the execution duration of for example the transfer operation, that is, to allow the actual execution duration of the transfer operation to appropriately exceed the theoretical execution duration while ensuring the safety or efficacy of the target. In other words, the actual execution duration constrained by the temporal constraint information is determined based on its theoretical time, and there is a correlation between the actual execution duration and the theoretical time. Therefore, in step S1800, the total duration of the transfer operation determined in step S1600 may be used to verify whether the temporal constraint information between the two adjacent nodes is reasonable. Any suitable verification logic may be implemented to verify the reasonability of the temporal constraint information. For example, the verification may be performed by comparing the total duration with the constraint time length indicated by the temporal constraint information.

In the technical solution described above, the total duration of performing the transfer operation on the target between two adjacent nodes is determined based on the connection relationship between the two adjacent nodes in the automated process, and then the total duration is utilized to verify the temporal constraint information configured in advance between the two nodes for constraining the execution duration of the transfer operation. This solution can ensure the efficacy of the target in the automated process, thereby ensuring the automated process to be performed accurately and smoothly.

Exemplarily, determining the execution sequence of the atomic operations of two adjacent nodes in step S1400 includes steps S1410 and S1420.

In step S1410, atomic operations of the two adjacent nodes are obtained by parsing based on node information of the two adjacent nodes and hardware device layout of the automation system, where each atomic operation represents an individual operation performed by a single hardware device. The automation system may refer to an entire system that implements the automated process. The automation system may include multiple hardware devices, and the hardware devices may be used to perform various operations on the target at different nodes or before the nodes. As previously described, the operation may be a primary operation performed by a primary execution device at the node, or may be a transfer operation performed by a transfer device. The hardware device may be any suitable device such as a liquid device, a centrifuge, an incubator, a microplate reader, a robotic arm, or the like. As described above, the node information of the node includes the service information of the node. In a case that the service corresponding to the node includes various operations, the service information of the node may include information such as operation categories of various operations executed on the node, execution sequences of various operations executed on the node, and estimated time consumption of various operations executed on the node. The atomic operations involved in the two adjacent nodes may be obtained by parsing from the node information between the two adjacent nodes and the layout of the hardware in the system, by using any suitable method. For example, the node information of each node may be configured to the corresponding node, and the operation process to be executed at the two nodes may be obtained from parsing by using a preset parsing algorithm. Ultimately, an ordered sequence of atomic operations is obtained for each node. For example, in a case that the operation performed at the node includes a pre-operation, a primary operation, and a post-operation, the ordered sequence of operations obtained from the parsing may sequentially include: atomic operations involved in the pre-operation, atomic operations involved in the primary operation, and atomic operations involved in the post-operation. Each atomic operation presents an individual atomic operation performed by a single hardware device, such as a transfer sub-operation performed by a robotic arm.

In this step, it should be noted that, considering the layout of the hardware devices in each node, corresponding atomic operation(s) may be added depending on actual demands. For example, a platform A implemented with an automation system, due to its specific hardware layout, requires only one transfer with a robotic arm in completing the transfer of the target between the corresponding two device nodes. For example, only one transfer with the robotic arm is required to transfer consumables from the centrifuge to the incubator. For platform B, due to its different hardware layout, two transfer sub-operations with robotic arms may be required. For example, the consumables are transferred from the centrifuge to the commutator with a first robotic arm, and then transferred from the commutator to the incubator with a second robotic arm. For the case of platform B, suitable atomic operation(s) should be added in step S1410 to ensure the normal progress of the automated process.

In step S1420, an execution sequence of the atomic operations obtained from the parsing is determined based on the connection relationship. After the atomic operations corresponding to each node are obtained from the parsing, the execution sequence of the atomic operations including the two nodes may be determined based on the connection relationship of the two nodes. For example, the execution sequence of the services corresponding to two adjacent nodes may be determined based on a direction of a line between the two adjacent nodes. For example, based on the direction of the line, it may be determined that the service corresponding to the upstream node is executed first, and the service corresponding to the downstream node is executed later. That is, it is determined that the atomic operations obtained by parsing for the upstream node are executed first, and the atomic operations obtained by parsing for the downstream node are executed later, so that the execution sequence of the atomic operations performed at the two nodes is determined.

According to the above solution, the atomic operations involved in the two nodes may be obtained from parsing depending on the actual layout of the hardware devices of the automation system, and the execution sequence of the atomic operations is determined based on the connection relationship between the nodes. Since the actual hardware layout is taken into consideration, the determined atomic operations between the two nodes and the execution sequence thereof better match the actual implementation of the automated process, thus being more accurate. In this way, the smooth progress of the automated process is ensured.

Exemplarily, the execution sequence includes a serial execution sequence and a parallel execution sequence. The determining a total duration for performing the transfer operation between the two adjacent nodes in step S1600 includes steps S1610 and S1620.

In step S1610, according to the execution sequence of the various atomic operations between the two adjacent nodes, the atomic operations that are performed in the serial execution sequence between the two adjacent nodes are determined, to form a serial sub-operation. As described above, the atomic operations of operations involved in the services corresponding to two adjacent nodes may include atomic operations of the transfer operation that transfers the target between the two nodes, and thus the execution sequence of the transfer operation that transfers the target between the two nodes may also be obtained accordingly. For atomic operations in the transfer operation performed on the target between two adjacent nodes, the execution sequence may be the serial-parallel combined sequence. Specifically, for example, one of the two adjacent nodes in the automated process may be a centrifuge node. At this node, before or after the primary operation of centrifuging the consumable by the centrifuge, the transfer operation for the consumable is also performed. This transfer operation may include a door opening sub-operation, a door closing sub-operation, and a commutator rotating sub-operation, and the three atomic operations may be executed in the parallel sequence. Atomic operations performed in the parallel sequence does not occupy the actual duration for performing the transfer operation on the target between two adjacent nodes, therefore the atomic operations performed in the parallel sequence may be excluded. That is, in step S 1610, atomic operations that are performed in the serial execution sequence between the two adjacent nodes are determined, excluding the atomic operations performed in the parallel sequence, to form the serial sub-operation. Then, in step S1620, a sum of preset execution durations of the atomic operations in the determined serial sub-operation may be calculated and determined as the total duration.

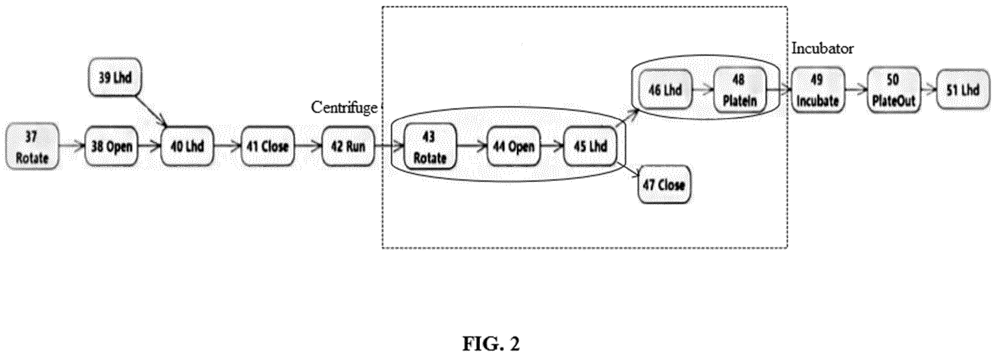

FIG. 2 shows a schematic diagram illustrating multiple atomic operations between two adjacent nodes according to an embodiment of the present disclosure. FIG. 2 shows the atomic operations of various operations involved in the services corresponding to the two adjacent nodes, including the atomic operations (the six atomic operations shown in the figure within the rectangular dashed box) of the transfer operation that transfers the target between the two nodes. Moreover, the execution sequences of the six atomic operations include serial execution sequence and parallel execution sequence. The "47 close" in the figure may be an atomic operation in a post-operation performed by an upstream node. For example, it may be a door closing sub-operation performed by the centrifuge or a lid opener on the periphery of the centrifuge. As shown in the figure, the execution sequence of the atomic operation may be the parallel execution sequence. And the execution sequence of other 5 atomic operations may be the serial execution sequence. Accordingly, in step S1610, a serial sub-operation formed by the five atomic operations in serial is determined. Further, in step S 1620, the sum of the preset execution durations of the five atomic operations is calculated, as the total duration of the transfer operation between the two nodes. It is to be understood that although parallel execution is a relative concept, for the embodiment of the present disclosure, only the execution sequence of the atomic operations to be excluded is determined as the parallel execution sequence.

According to the above technical solution, by determining the serial sub-operation formed by atomic operations executed in serial sequence between two adjacent nodes, the sum of the preset durations of all the atomic operations in the serial sub-operation is determined as the total duration of the transfer operation. In this way, the time occupied by the atomic operations executed in parallel is excluded, so that the determined total duration is more accurate and the accuracy of the verification of the temporal constraint information is ensured. And the efficacy of the target in the automated process is ensured, thereby ensuring the automated process to be performed accurately and smoothly.

Exemplarily, the determining a total duration for performing the transfer operation between the two adjacent nodes in step S1600 includes step S1630.

In step S1630, the total duration is determined based on node types of the two adjacent nodes, the execution sequence, and preset execution durations of at least part of the atomic operations involved in a device node of the two adjacent nodes. Where the node type includes the device node. According to the embodiment of the present disclosure, the node type may be set depending on the design requirements of the automated process. For example, the node type may be set based on the type of the service corresponding to each node. As previously described, the service may include various operations performed on the target with a preset experimental device. According to an embodiment of the present disclosure, the node type of the node may include a device node. The service corresponding to the device node may include various operations performed by the device, such as the pre-operation, the primary operation, and the post-operation in the foregoing examples. At the device node, the device is the subject that performs the operations, and one or more targets are operation objects. At least a part of the atomic operations involved in the device node may include all atomic operations of various operations involved in the service corresponding to the device node, or may be atomic operations of a specific type. For example, the at least a part of the atomic operations involved in the device node may be all or part of the atomic operations of the transfer operation performed on the target at the device node. In this step, the total duration for performing the transfer operation between two adjacent nodes may be determined based on the node types of the two adjacent nodes, the execution sequence of the atomic operations between the two nodes, and preset durations of the at least part of the atomic operations involved in the device node. For example, the atomic operations involved in the transfer operation performed between two adjacent nodes may be determined based on the node types of the two adjacent nodes. Based on the execution sequence of the atomic operations, atomic operations performed in the parallel execution sequence are excluded, so that the serial sub-operation formed by the remaining atomic operations is determined. And the sum of the preset execution durations of respective atomic operations in the serial sub-operation may be calculated as the total duration for performing the transfer operation on the target between the two nodes. Definitely, other suitable solutions may be adopted to determine the total duration, and the present disclosure is not limited in this aspect.

According to the solution described above, the total duration for performing the transfer operation between two adjacent nodes is determined based on the node types of the two adjacent nodes, the execution sequence, and preset execution durations of at least part of the atomic operations involved in a device node of the two adjacent nodes. The total duration of the transfer operation determined by this solution is more accurate, the calculation logic is simple, and the calculation amount is small.

Exemplarily, the node type further includes a start node of the automated process. As described above, the start node may refer to a node arranged at the beginning of the automated process. Determining the total duration in step S1600 includes the step S1631.

In step S1631, in a case that the two adjacent nodes are respectively a start node and a device node, a first sum of the preset execution durations of all atomic operations involved in a pre-operation corresponding to the device node is determined as the total duration, where the pre-operation is completed before a device corresponding to the device node performs its own operation. The start node may be a starting location of the target, for example, the original location where consumables are stored, such as the original storage device for the consumables. The device corresponding to the device node may be a primary execution device that performs the primary operation on the target the device node, such as the centrifuge in the foregoing example. And the device node may include other devices such as a transfer device that performs transfer operation on the target. The transfer device may be the primary execution device corresponding to the node, or peripheral devices to the primary execution device, such as a lid opener and a lid closer., or other transfer devices such as a robotic arm.

In a case that the two adjacent nodes are a start node and a device node, the transfer operation performed on the target between the two nodes may be a series of operations that transfer the target from a starting location such as a storage device that stores original consumables, to the primary execution device corresponding to the device node, in order to facilitate the primary execution device to perform the primary operation on the target. Since no operation on the target is involved at the start node, the transfer operation performed on the target between the two nodes includes the pre-operation which is involved in the device node connected to the start node and is completed before the primary execution device performs the primary operation. For example, the pre-operation may be, for example, a transfer sub-operation, a lid opening sub-operation, a lid closing sub-operation, or the like performed by the transfer device involved in the device node. The pre-operation may be understood as a preparing operation performed before the primary execution device performs the primary operation.

In a specific example, the upstream node may be a start node of the consumable 1, and the downstream node may be a device node representing a liquid workstation. The preset execution durations of the atomic operations involved in the pre-operation, which is completed before the liquid handling operation is performed by the liquid workstation, may then be determined based on the service information of the device node of the liquid workstation. The pre-operation may be a preparing work to facilitate the liquid workstation to perform the liquid handling operation. As described above, the service information of a device node may include sub-operation categories of atomic operations included in each operation performed at the node. For example, sub-operation categories of the pre-operation corresponding to the device node may be included. By way of example and not limitation, atomic operations involved in the pre-operation may be determined based on the sub-operation categories of the pre-operation, and a corresponding serial sub-operation may be determined based on the execution sequence of the atomic operations. Ultimately, based on the preset execution duration of each atomic operation, the first sum of the preset execution durations of the respective atomic operations of the serial sub-operation may be calculated as the total duration for performing the transfer operation on target between the start node and the device node. Furthermore, based on the total duration, whether the temporal constraint information between the start node and the device node is reasonable is verified. This solution is readily understood by those skilled in the art and will not be described herein.

According to the above solution, in a case that two adjacent nodes are the start node and the device node, the first sum of the preset execution durations of the respective atomic operations involved in the pre-operation corresponding to the device node may be determined as an estimated total duration for performing the transfer operation between the two nodes. The described solution has simple execution logic, small amount of calculation, and improved accuracy in determining the total duration, and the efficiency and accuracy of the verification are improved.

Exemplarily, determining the total duration in step S1630 includes step S1632 and step S1633.

In step S1632, in a case that the two adjacent nodes are both device nodes, a second sum of the preset execution durations of all atomic operations involved in a post-operation corresponding to an upstream node of the two adjacent nodes is calculated, and a third sum of the preset execution durations of all atomic operations involved in a pre-operation corresponding to a downstream node of the two adjacent nodes is calculated. Where the post-operation is completed after a device corresponding to the upstream node performs its own operation. The pre-operation is completed before a device corresponding to the downstream node performs its own operation. It is to be understood that for two adjacent device nodes, after the primary execution device corresponding to the upstream device node completes the primary operation on the target, the target may be transferred out of the execution device and transferred to the primary execution device corresponding to the downstream device node, to facilitate the primary execution device of the downstream device node to perform corresponding primary operation on the target. Therefore, the transfer operation between the two device nodes may be a post-operation performed on the target by a transfer device involved in an upstream device node of the two device nodes and a pre-operation performed on the target by a transfer device involved in a downstream device node. As described above, the pre-operation corresponding to the device node may be completed before the primary execution device corresponding to the device node performs the primary operation. That is, the pre-operation corresponding to the device node may be the work preparing for the primary operation. It is to be understood that the post-operation corresponding to the device node may be an operation of transferring the target out of the primary execution device corresponding to the device node after the primary execution device performs the primary operation, to facilitate transferring the target to the next location.

The operation information of the device node may include a sub-operation category of the pre-operation corresponding to the device node, or may include a sub-operation category corresponding to a post-operation. In a case that two adjacent nodes are device nodes, all atomic operations involved in the post-operation may be found from the sub-operation category of the post-operation corresponding to the upstream device node, and the sum of the preset execution durations of the atomic operations may be calculated based on the execution sequence of the atomic operations, to obtain the second sum of the preset execution durations. All atomic operations involved in the pre-operation may be found from the sub-operation category of the pre-operation corresponding to the downstream device node, and the sum of the preset execution durations of the atomic operations may be calculated based on the execution sequence of the atomic operations, to obtain the third sum of the preset execution durations.

Referring back to FIG. 2, the upstream device node may be a device node where the primary execution device is a centrifuge, and the downstream device node may be a device node where the primary execution device is an incubator. The post-operations involved in the upstream device node of the centrifuge may include various atomic operations that transfer the consumables out after the centrifuge performs a centrifugation operation on the consumables. The atomic operation may be, for example, a rotation sub-operation in which the commutator consumable is rotated to the outlet ("43 rotate" shown in the figure), a door opening sub-operation ("44 open" shown in the figure), a transfer sub-operation in which the robotic arm transfers the consumable out ("45 lhd" shown in the figure), or a door closing sub-operation ("47 close" shown in the figure). Based on the execution sequence of these atomic operations, the sum of the preset execution durations of the atomic operations performed in serial may be determined as the second sum of the preset execution durations. For example, the door closing sub-operation in the parallel execution sequence may be excluded, and the sum of the preset execution durations of the other three atomic operations may be determined as the second sum of the preset execution durations. The atomic operations involved in the pre-operation corresponding to the downstream device node in which the primary execution device is the incubator may include a transfer sub-operation ("46 lhd" shown in the figure) that the robotic arm moves consumables into the device and a plate-placing sub-operation ("48 platein" shown in the figure) that the consumables are placed into the incubator. The two atomic operations is in the serial execution sequence, so the preset execution durations of the two atomic operations may be determined as the third sum of the preset execution durations.

In step S1633, the second sum of the preset execution durations and the third sum of the preset execution durations are added up to obtain the total duration. The second sum of the preset execution durations of the post-operation corresponding to the upstream device node and the third sum of the preset execution durations of the pre-operation corresponding to the downstream device node determined in the above step may be summed up as the estimated total duration for performing the transfer operation on the target between the two device nodes.

According to the above solution, in a case that two adjacent nodes are both device nodes, the estimated total duration for performing the transfer operation on the target between two adjacent nodes is determined based on the sum of the preset execution durations of the atomic operations involved in the post-operation corresponding to the upstream device node and the sum of the preset execution durations of the atomic operations involved in the pre-operation corresponding to the downstream device node, and then whether the temporal constraint information is reasonable is verified based on the total duration. The described solution has simple execution logic, small amount of calculation, and improved accuracy in determining the total duration, and the efficiency and accuracy of the verification are improved.

Exemplarily, the node type further includes an end node of the automated process. The end node may be an end location indicating the end of the process. Determining the total duration in step S1630 includes the step S1634.

In step S1634, in a case that the two adjacent nodes are respectively a device node and an end node, a fourth sum of preset execution durations of all atomic operations involved in a post-operation corresponding to the device node is determined as the total duration. Where the post-operation is completed after a device corresponding to the device node performs its own operation.

It is to be understood that the end node may be the location where the process ends, and there is no specific operation performed by the device on the target at the end node. Therefore, in the case that the upstream node of two adjacent nodes is the device node and the downstream node is the end node, the execution duration for performing the transfer operation on the target between the two nodes may be determined only based on the estimated execution duration of the post-operation corresponding to the device node. Specifically, all the atomic operations involved may be determined based on the service information of the device node, for example, based on the sub-operation category of the post-operation corresponding to the device node. Then, based on the execution sequence of atomic operations, the serial sub-operation may be determined. Subsequently, the sum of the preset execution durations of respective atomic operations of the serial sub-operation may be determined as the fourth execution duration. The atomic operations involved in the post-operation corresponding to the device node directly connected to the end node may also be any suitable atomic operation. Such as door opening sub-operation, door closing sub-operation, transfer sub-operation, or the like. The fourth sum of preset execution durations may be determined as an estimated total duration of the transfer operation between the device node and the end node, and whether the temporal constraint information is reasonable may be verified based on the total duration.

According to the above solution, in a case that two adjacent nodes are the device node and the end node, the sum of the preset execution durations of the respective atomic operations involved in the post-operation corresponding to the device node may be determined as an estimated total duration for performing the transfer operation between the two nodes. Then whether the temporal constraint information is reasonable is verified based on the total duration. The described solution has simple execution logic, small amount of calculation, and improved accuracy in determining the total duration, and the efficiency and accuracy of the verification are improved.

Exemplarily, before the obtaining temporal constraint information between two adjacent nodes in the automated process in step S1200, the method 1000 further includes steps S1110 and S1120

In step S1110, a graphical user interface is displayed, where the graphical user interface includes an operable control. As described above, the temporal constraint information for two adjacent nodes may be configured during the design stage of the automated process. The two adjacent nodes may be an upstream node A and a downstream node B. By way of example and not limitation, a graphical user interface for configuring the temporal constraint information may be displayed in response to a user operation that selects the temporal constraint information of the upstream node. According to the embodiment of the present disclosure, the temporal constraint information between two nodes may have one or more types, and thus, one or more operable controls may also be included in the graphical user interface. Each operable control may be used to operatively configure one type of temporal constraint information. For example, the temporal constraint information between two nodes may include expiration time information and maximum waiting time information. A list of "temporal constraint information configurations between nodes" may be included in the graphical user interface. Two operable controls for configuring the temporal constraint information between the currently selected node and its adjacent downstream node may be included in the list. One of the operable controls may be used for configuring the "expiration time" of the transfer operation between the two nodes, and the other may be used for configuring the "maximum waiting time". The operable control may be any suitable control, such as an input control or a drop-down list selection control. Furthermore, in a case of configuring temporal constraint information for multiple targets between the two adjacent nodes, the graphical user interface supports configuring the temporal constraint information of each target. Also in the above example, under the list of the "temporal constraint information configurations between nodes" in the graphical user interface, there may be rows of operable controls, which may be used separately to configure the temporal constraint information for constraining the transfer operation of each target.

In step S1120, the temporal constraint information is received from a user in response to a first operation performed by the user with the operable control. The first operation performed by the user with the operable control may be any suitable operation. The first operation may be, for example, the user inputting a desired time through an input control, or the user selecting a desired time through a drop-down list control. After the user inputs or selects the desired constraint time, the temporal constraint information inputted or selected by the user may be received and displayed on the graphical user interface. For example, the time "55" inputted by the user using the input control under the "expiration time" list in the graphical user interface may be received in step S1120, and the constraint time "55" may be displayed correspondingly on the interface. Thus, the constraint for the execution duration of an operation such as the transfer operation of transferring "Consumable 1" between the two nodes is configured. After the configuration is completed, the expiration time of the target may be obtained at the node in step S1200, and the expiration time of "55" seconds in the temporal constraint information may be verified based on the determined total duration in step S1800.

The solution of providing a visual human-computer interaction interface and operable controls for users to freely configure temporal constraint information facilitates users to configure the temporal constraint information more accurately, and the user experience is better.

Exemplarily, at least one device node of the two adjacent nodes corresponds to multiple targets.

Receiving the temporal constraint information from a user in response to a first operation performed by the user with the operable control in step S1120 includes step S1121. In step S1121, the temporal constraint information for each target is received from the user in response to the first operation performed for each target by the user with the operable control. For example, any device node of two adjacent nodes contains the operation of the primary execution device performed on multiple consumables. The device node is also involved in transfer operation performed on multiple consumables. The temporal constraint information is for constraining the execution duration of the transfer operations between two adjacent nodes for each of the multiple targets. For example, in the foregoing examples of steps S1110 and S1120, temporal constraint information for different consumables input by the user using operable controls of the graphical user interface may be received. For example, the expiration time of "consumable 1" input by the user is "55" seconds, and the expiration time of "consumable 2" input by the user is "50" seconds. In step S1600, the total duration of preset execution duration of the transfer operation for "consumable 1" and the total duration of preset execution duration of the transfer operation for "consumable 2", which are involved in the device node of the two nodes, are determined.

In step S1800, verifying whether the temporal constraint information is reasonable includes step S1810. In step S1810, whether the temporal constraint information about each of the multiple targets between the two adjacent nodes is reasonable is verified. For the forgoing example that the temporal constraint information for the "consumable 1" and the "consumable 2" are received from the user, in step S1810, the "55" seconds for constraining the expiration time of the "consumable 1" may be verified based on the total duration of the preset execution duration of the transfer operation performed on the "consumable 1", which is determined in step S1600, and whether the configuration of the expiration time "55" seconds is reasonable is determined. In addition, the "50" seconds for constraining the expiration time of the "consumable 2" is verified based on the total duration of the preset execution of the transfer operation performed on the "consumable 2", which is determined in step S1600, and whether the configuration of the expiration time "50" seconds is reasonable is determined.

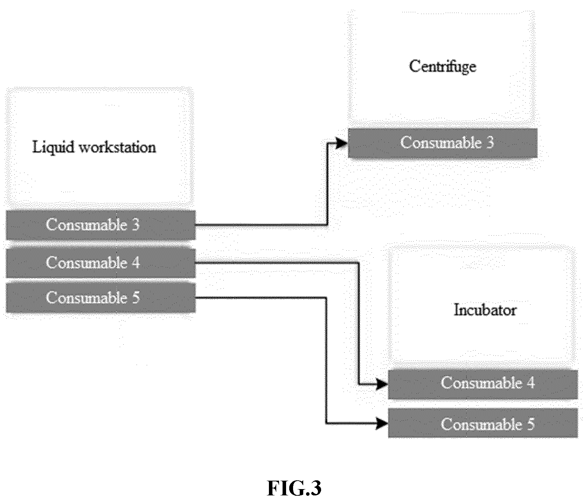

FIG. 3 shows a schematic diagram illustrating a part of an automated process according to an embodiment of the present disclosure. Three device nodes in the automated process are shown in FIG. 3. Where, the upstream node "liquid workstation" and the downstream node "centrifuge" are adjacent device nodes. The two device nodes may include temporal constraint information for constraining the execution duration of the transfer operation performed on "consumable 3". In step S1600, for the two device nodes, the sum of the estimated execution duration of the post-operation performed on the "consumable 3" involved by the device node of the "liquid workstation" and the estimated execution duration of the pre-operation performed on the "consumable 3" involved by the device node of the "centrifuge" may be determined as the total duration of the transfer operation performed on the "consumable 3" between the two nodes. In step S1800, the temporal constraint information for constraining the execution duration for performing the transfer operation on "consumable 3" may be verified based on the determined total duration.

In FIG. 3, the upstream node "liquid workstation" and the downstream node "incubator" are also adjacent device nodes. Between the two device nodes, temporal constraint information for constraining the execution duration for performing the transfer operation on "consumable 4" and temporal constraint information for constraining the execution duration for performing the transfer operation on "consumable 5" may be included. In step S1600, the sum of the estimated execution duration of the post-operation performed on the "consumable 4" involved by the device node of the "liquid workstation" and the estimated execution duration of the pre-operation performed on the "consumable 4" involved by the device node of the "centrifuge" may be determined as the total duration for performing the transfer operation on the "consumable 4" between the two nodes, and the total duration may be referred as "total transfer duration of the consumable 4". The sum of the estimated execution duration of the post-operation performed on the "consumable 5" involved by the device node of the "liquid workstation" and the estimated execution duration of the pre-operation performed on the "consumable 5" involved by the device node of the "centrifuge" may be determined as the total duration for performing the transfer operation on the "consumable 5" between the two nodes, and the total duration may be referred as "total transfer duration of the consumable 5". In step S1810, the temporal constraint information for constraining the execution duration for performing the transfer operation on the "consumable 4" may be verified based on the "total transfer duration of the consumable 4"; and the temporal constraint information for constraining the execution duration for performing the transfer operation on the "consumable 5" may be verified based on the "total transfer duration of the consumable 5".

According to the above solution, in a case that the temporal constraint information of multiple targets is included between two adjacent nodes, the temporal constraint information of each target may be verified separately. In this way, the accuracy and effectiveness of the verification are ensured, thereby ensuring the accurate implementation of the automated process.

Exemplarily, the temporal constraint information includes expiration time information and maximum waiting time information. The expiration time indicated by the expiration time information may be a preset maximum safe time of the transfer operation performed on the target; and a corresponding expiration process is performed on the target if the preset maximum safe time is exceeded. For example, the target may be marked as a faulty target to remind the user to pay attention to the faulty target. The maximum waiting time indicated by the maximum waiting time information may be a preset maximum effective time of the transfer operation performed on the target; and a corresponding invalidating and/or discarding operation is performed on the target in a case that the preset maximum effective time is exceeded. The preset expiration time may be a sum of the execution duration of the transfer operation and the tolerant time of the transfer operation. The preset maximum waiting time may be a relative time with respect to the expiration time, that is, it may be an additional time beyond the expiration time. For example, in step S1620, it is received that the expiration time inputted by the user is 50 seconds, and the maximum waiting time inputted by the user is 10 seconds. Then the maximum waiting time refers that the additional 10 seconds is added to the 50 seconds, that is, the maximum waiting time indicated by the temporal constraint information obtained in step S1200 is 60 seconds. Then, if it is recognized that the actual duration for performing the transfer operation on the target between the two nodes exceeds 60 seconds during the execution of the process, the corresponding invalidating and/or discarding operation may be performed on the target.

Verifying whether the temporal constraint information is reasonable in step S1800 includes steps S1820 and S1830. In step S1820, whether an expiration time indicated by the expiration time information is reasonable is verified in a case that the expiration time is greater than 0. It is to be understood that users concerned about the expiration time in the automated process can configure the expiration time with the operable control in the graphical user interface. In this case, the expiration time is not 0. The expiration time information may be verified in this step based on the determined total duration of the transfer operation. The temporal constraint information may be determined to be reasonable in a case that the expiration time indicated by the expiration time information is greater than or equal to the total duration. In a case that the expiration time is greater than or equal to the total duration for performing the transfer operation on the target between the two nodes determined in step S1600, it indicates that the expiration time is configured reasonably. In a case that the expiration time indicated by the expiration time information is less than the total duration, it is determined that the temporal constraint information is wrong, which may affect the smooth progress of automated process. In determining that the temporal constraint information is unreasonable, corresponding prompt information may be sent to remind the user to make modifications. For example, a prompt box of "verification failure" may be popped up in a verification interface, and the information about the node with the verification failure may also be prompted. Therefore, it facilitates users to modify the temporal constraint information between the corresponding nodes based on the prompt information.

In step S1830, a maximum execution duration of the transfer operation is determined based on the total duration and a maximum waiting time indicated by the maximum waiting time information, in a case that the expiration time is equal to 0. It can be understood that the user not concerned about the expiration time information and only concerned about the maximum waiting time information may not configure the expiration time but only configure the maximum waiting time. For example, in a case that the user inputs the number 0 in the operable control corresponding to the expiration time and inputs the number 10 in the operable control corresponding to the maximum waiting time, it may indicate that constraint of the expiration time of the target between the two nodes is not activated, and only constraint of the maximum time is activated. As described above, the maximum waiting time configured by the user is a relative time with respect to the expiration time. Consequently, in a case that the expiration time indicated by the expiration temporal constraint information is 0, the maximum waiting time cannot be accurately obtained during the execution of the automated process, and the temporal constraint of the maximum waiting time cannot be accurately implemented, that is, the temporal constraint of the maximum execution duration for performing the transfer operation on the target between the two nodes cannot be accurately obtained. In this step, the maximum waiting time may be updated based on the total duration for performing the transfer operation between the two nodes, which is determined in the preceding step.

According to the above solution, in a case that the expiration time indicated by the expiration time information in the preset temporal constraint information is 0, the maximum waiting time information in the temporal constraint information may be updated. This solution can effectively ensure the reasonability of the preset temporal constraint information, thereby ensuring the effective and accurate operation of the automated process.

Exemplarily, determining the maximum execution duration of the transfer operation in step S1830 includes step S1831. In step S1831, a sum of the total duration and the maximum waiting time indicated by the maximum waiting time information is determined as the maximum execution duration. According to an embodiment of the present disclosure, in a case that the expiration time indicated by the expiration time information is 0, the total duration for performing the transfer operation between the two nodes and the maximum waiting time indicated by the maximum waiting time information which are determined in step S1600 may be summed up, and the sum may be updated as the maximum execution duration of the transfer operation. This solution can ensure the reasonability of each piece of preset temporal constraint information, thereby ensuring the effective and accurate operation of the automated process. Moreover, the execution logic of this solution is simple and the amount of calculation is small.

Exemplarily, the temporal constraint information includes expiration time information, and the method 1000 further includes step S1900 after verifying whether the temporal constraint information is reasonable in step S1800.

In step S1900, after determining that the temporal constraint information is reasonable, the automated process is executed in response to a second operation performed by the user. During the automated process, whether an execution duration for performing the transfer operation on the target between the two adjacent nodes is greater than an expiration time indicated by the expiration time information is determined; and the target is marked with an expired state in a case that the execution duration for performing the transfer operation on the target between the two adjacent nodes is greater than the expiration time indicated by the expiration time information. The second operation may be any suitable operation. By way of example and not limitation, a control of "executing process" may be included in the user interface, and the second operation may be an operation of a user clicking on the control. According to an embodiment of the present disclosure, the automated process may be executed after verifying that the temporal constraint information between two adjacent nodes is correct. Further, in a case that the temporal constraint information includes the expiration time information, the actual execution duration of the transfer operation that transfers the target between the two nodes may be monitored when the process runs to the transfer operation associated with the expiration time information, and the target may be marked as the expired state in a case that the actual execution duration of the target exceeds the expiration time. In this way, it may be reminded to the user that the target has expired, to facilitate the corresponding processing of the expired target.

In the above solution, in the executing of the automated process, expiration monitoring is performed with regard to the actual execution duration of the transfer operation on the target based on the verification passed temporal constraint information, and the target is marked with the expired state in a case that the target is determined to be expired. Therefore, users are reminded to pay special attention to expired targets, so as to ensure the efficacy and usability of targets, and furthermore, to ensure the smooth and effective execution of the automated process.

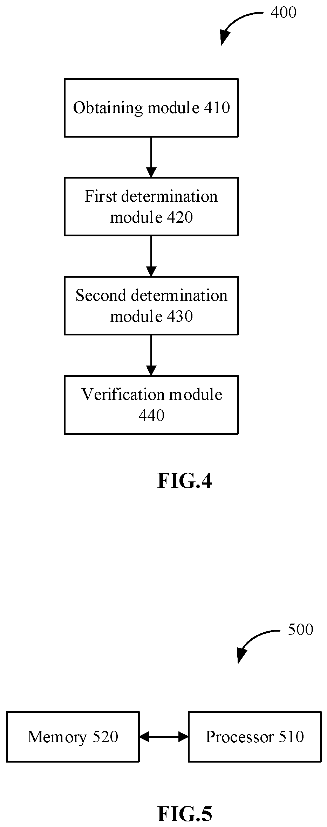

According to another aspect of the present disclosure, a management apparatus for an automated process is provided. FIG. 4 is a schematic block diagram of a management apparatus 400 for an automated process according to an embodiment of the present disclosure. As shown in FIG. 4, the apparatus 400 includes an obtaining module 410, a first determination module 420, a second determination module 430, and a verification module 440.

The obtaining module 410 is configured to obtain temporal constraint information between two adjacent nodes in the automated process, where the temporal constraint information is for constraining an execution duration for a transfer operation performed on a target between the two adjacent nodes.

The first determination module 420 is configured to determine an execution sequence of atomic operations between the two adjacent nodes based on a connection relationship of the two adjacent nodes in the automated process.

The second determination module 430 is configured to determine a total duration for performing the transfer operation between the two adjacent nodes, based at least on the execution sequence and preset execution duration of each of the atomic operations.

The verification module 440 is configured to verify whether the temporal constraint information is reasonable based on the total duration.

According to another aspect of the present disclosure, an electronic device is further provided. FIG. 5 is a schematic block diagram of an electronic device according to an embodiment of the present disclosure. As shown in FIG. 5, the electronic device 500 includes a processor 510 and a memory 520. Where, the memory 520 stores computer program instructions, and the computer program instructions, when executed by the processor 510, implement the management method 1000 for the automated process described above.

According to another aspect of the present disclosure, a storage medium is further provided. The storage medium stores program instructions, and the program instructions, when executed, implement the management method for the automated process described above. The storage medium may include, for example, a storage component of a tablet computer, a hard disk of a personal computer, a read-only memory (ROM), an erasable programmable read-only memory (EPROM), a portable read-only memory (CD-ROM), a USB memory, or any combination of the storage media described above. The computer-readable storage medium may be any combination of one or more computer-readable storage media.

Those skilled in the art can understand the specific implementation schemes and beneficial effects of the management apparatus for the automated process, the electronic device and the storage medium described above by reading the related description of the management method for the automated process described above, which are not repeated herein for the sake of brevity.

Although the embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall into the scope claimed by the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may use different methods to implement the described functions for each specific application, but such implementation should not be regarded as beyond the scope of the present disclosure.

It should be understood that the apparatuses, devices and methods disclosed in the embodiments of the present disclosure may be implemented in other manners. For example, the apparatus/device embodiments described above are only schematic. For example, the division of the units is only based on logical functions, and there may be other division ways in actual implementation, such as multiple units or components may be combined or integrated into another device, or some features may be neglected or not executed.

In the specification provided herein, a lot of specific details are described. However, it may be appreciated that the embodiments of the present disclosure may be implemented without these specific details. In some instances, well-known methods, structures and techniques are not shown in detail in order to avoid obscuring understanding of the description.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification may be combined in any way. Unless otherwise expressly stated, each feature disclosed in this specification (including the claims, abstract and drawings) may be replaced by an alternative feature that provides the same, equivalent or similar purpose.

In addition, it may be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. It may be understood by those skilled in the art that a microprocessor or a digital signal processor (DSP) may be used in practice to realize some or all of the functions of some of the modules of the management apparatus for the automated process according to the embodiments of the present disclosure. The present disclosure may alternatively be implemented as a device or program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" /"including" does not exclude the presence of elements or steps not listed in the claims. The word "one" or "an" preceding an element does not exclude the presence of multiple of such elements. The present disclosure may be implemented by means of hardware including several different elements and by means of a suitably programmed computer. In a unit claim enumerating several devices, several of these devices may be embodied by a same hardware item. The use of the words "first", "second", and "third", etc. does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those skilled in the art within the technical scope disclosed in the present disclosure shall fall within the protection scope of the present disclosure. Therefore, the protection scope of the present disclosure shall be in accordance with the protection scope of the claims.

## Claims

1. A management method for an automated process, comprising:
obtaining temporal constraint information between two adjacent nodes in the automated process, wherein the temporal constraint information is for constraining an execution duration for performing a transfer operation on a target between the two adjacent nodes;
determining an execution sequence of atomic operations between the two adjacent nodes based on a connection relationship of the two adjacent nodes in the automated process;
determining a total duration for performing the transfer operation between the two adjacent nodes, based at least on the execution sequence and a preset execution duration of each of the atomic operations; and
verifying whether the temporal constraint information is reasonable based on the total duration.

2. The management method for the automated process according to claim 1, wherein the execution sequence comprises a serial execution sequence and a parallel execution sequence, and
the determining the total duration for performing the transfer operation between the two adjacent nodes comprises:
determining, based on the execution sequence of the atomic operations between the two adjacent nodes, atomic operations that are performed in the serial execution sequence between the two adjacent nodes, to form a serial sub-operation; and
calculating a sum of the preset execution durations of atomic operations in the serial sub-operation as the total duration.

3. The management method for the automated process according to claim 1 or 2, wherein the determining the total duration for performing the transfer operation between the two adjacent nodes comprises:
determining the total duration based on node types of the two adjacent nodes, the execution sequence, and the preset execution durations of at least part of the atomic operations involved in a device node of the two adjacent nodes, wherein the node type comprises a device node.

4. The management method for the automated process according to claim 3, wherein the node type further comprises a start node of the automated process, and the determining the total duration comprises:
in a case that the two adjacent nodes are respectively a start node and a device node, determining a first sum of preset execution durations of all atomic operations involved in a pre-operation corresponding to the device node as the total duration, wherein the pre-operation is completed before a device corresponding to the device node performs its own operation.

5. The management method for the automated process according to claim 3, wherein the determining the total duration comprises:
in a case that the two adjacent nodes are both device nodes, calculating a second sum of preset execution durations of all atomic operations involved in a post-operation corresponding to an upstream node of the two adjacent nodes, and calculating a third sum of preset execution durations of all atomic operations involved in a pre-operation corresponding to a downstream node of the two adjacent nodes, wherein the post-operation is completed after a device corresponding to the upstream node performs its own operation, and the pre-operation is completed before a device corresponding to the downstream node performs its own operation; and
adding the second sum of the preset execution durations and the third sum of the preset execution durations to obtain the total duration.

6. The management method for the automated process according to claim 3, wherein the node type further comprises an end node of the automated process, and the determining the total duration comprises:
in a case that the two adjacent nodes are respectively a device node and an end node, determining a fourth sum of preset execution durations of all atomic operations involved in a post-operation corresponding to the device node as the total duration, wherein the post-operation is completed after a device corresponding to the device node performs its own operation.

7. The management method for the automated process according to claim 1 or 2, wherein before the obtaining temporal constraint information between two adjacent nodes in the automated process, the method further comprises:
displaying a graphical user interface, wherein the graphical user interface comprises an operable control; and
receiving the temporal constraint information from a user in response to a first operation performed by the user with the operable control.

8. The management method for the automated process according to claim 7, wherein at least one device node of the two adjacent nodes corresponds to a plurality of targets, and the receiving the temporal constraint information from the user in response to the first operation performed by the user with the operable control comprises:
receiving temporal constraint information for each target from the user in response to the first operation performed for each target by the user with the operable control; and
the verifying whether the temporal constraint information is reasonable comprises: verifying whether the temporal constraint information about each of the plurality of the targets between the two adjacent nodes is reasonable.

9. The management method for the automated process according to claim 1 or 2, wherein the temporal constraint information comprises expiration time information and maximum waiting time information, and
the verifying whether the temporal constraint information is reasonable comprises:
verifying whether an expiration time indicated by the expiration time information is reasonable, in a case that the expiration time is greater than 0; and
determining a maximum execution duration of the transfer operation based on the total duration and a maximum waiting time indicated by the maximum waiting time information, in a case that the expiration time is equal to 0.

10. The management method for the automated process according to claim 9, wherein the determining a maximum execution duration of the transfer operation comprises:
determining a sum of the total duration and the maximum waiting time indicated by the maximum waiting time information as the maximum execution duration.

11. The management method for the automated process according to claim 1 or 2, wherein the temporal constraint information comprises expiration time information, and after the verifying whether the temporal constraint information is reasonable, the method further comprises:
after determining that the temporal constraint information is reasonable, running the automated process in response to a second operation performed by the user; and
when the automated process proceeds to a downstream node in the two adjacent nodes, determining whether an execution duration for performing the transfer operation on the target between the two adjacent nodes is greater than an expiration time indicated by the expiration time information, and marking the target with an expired state in a case that the execution duration of the transfer operation on the target between the two adjacent nodes is greater than the expiration time indicated by the expiration time information.

12. The management method for the automated process according to claim 1 or 2, wherein the determining the execution sequence of atomic operations between the two adjacent nodes comprises:
parsing to obtain atomic operations between the two adjacent nodes based on node information of the two adjacent nodes and hardware device layout of an automation system, wherein each atomic operation represents an individual operation performed by a single hardware device; and
determining, based on the connection relationship, an execution sequence of the atomic operations obtained from the parsing.

13. A management apparatus for an automated process, comprising:
an obtaining module, configured to obtain temporal constraint information between two adjacent nodes in the automated process, wherein the temporal constraint information is for constraining an execution duration for performing a transfer operation on a target between the two adjacent nodes;
a first determination module, configured to determine an execution sequence of atomic operations between the two adjacent nodes based on a connection relationship of the two adjacent nodes in the automated process;
a second determination module, configured to determine a total duration for performing the transfer operation between the two adjacent nodes, based at least on the execution sequence and a preset execution duration of each of the atomic operations; and
a verification module, configured to verify whether the temporal constraint information is reasonable based on the total duration.

14. An electronic device, comprising a processor and a memory, wherein the memory stores computer program instructions, and the computer program instructions, when executed by the processor, implement the management method for the automated process according to any one of claims 1 to 12.

15. A storage medium, wherein the storage medium stores program instructions, and the program instructions, when executed, implement the management method for the automated process according to any one of claims 1 to 12.
